# EUROPÄISCHE PATENTSCHRIFT

(11) **EP 0 755 709 B1**
(45) Veröffentlichungstag und Bekanntmachung des Hinweises auf die Patenterteilung: **18.09.2002**
(21) Anmeldenummer: 96112124.1
(22) Anmeldetag: 26.07.1996
(51) Int. Cl.: B01D 39/12, B01D 46/24

(54) **Aerosolfilter**
Filter for removing aerosols
Filtre collecteur d'aérosols

(30) Priorität: 28.07.1995 DE 19527814
(43) Veröffentlichungstag der Anmeldung: 29.01.1997
(73) Patentinhaber: Framatome ANP GmbH, 91050 Erlangen (DE)
(72) Erfinder: Lisson, Johann, Dr., 64291 Darmstadt (DE); Blinn, Klaus, Dipl.-Ing., 63322 Rödermark (DE); Gliha, Viktor, 63456 Hanau (DE); Kleinschroth, Karl-Heinz, Dipl.-Ing., 64546 Mörfelden-Walldorf (DE)
(74) Vertreter: Tergau & Pohl Patentanwälte

(56) Entgegenhaltungen:
- DE-A- 2 221 068
- DE-A- 2 541 383
- GB-A- 698 751
- GB-A- 960 640
- US-A- 4 696 751

## Beschreibung

Die Erfindung betrifft einen Aerosolfilter mit einer Anzahl von koaxial angeordneten, zylinderförmigen Filterflächen.

Bei einer Filtration durchströmt ein zu filterndes Medium einen Filter. Je nach Art des zu filtenden Mediums wird dabei zwischen verschiedenen Filtertypen unterschieden. Zur Abscheidung von Öl, Aerosolen oder Coalesceren aus der Luft oder aus Flüssigkeiten werden üblicherweise Aerosolfilter (Schwebstofffilter) eingesetzt, wie sie beispielsweise aus der Druckschrift Dubbel, "Taschenbuch für Maschinenbau", 16. Auf., Springer 1987, Seite M48, bekannt sind.

Bei einem derartigen Aerosolfilter mit einer Anzahl von koaxial angeordneten, zylinderförmigen Filterflächen durchströmt das zu filternde Medium diese von innen nach außen. Dabei bewirkt die Vergrößerung der Filterflächen durch Vergrößerung der Zylinderradien eine Abnahme der Durchströmungsgeschwindigkeit des Medium durch die Filterfläche mit zunehmendem Zylinderradius. Diese Verringerung der Durchströmungsgeschwindigkeit führt zu einem verstärkten Zusammballen von Öltröpfchen oder Aerosolpartikeln. Die sich somit vergrößernden Öltröpfchen oder Aerosolpartikel werden schließlich aufgrund ihres zunehmenden Gewichts durch die Schwerkraft aus der Strömungsrichtung des Mediums abgelenkt und somit abgeschieden.

Die Filterflächen bestehen üblicherweise aus Keramikelementen, aus Glasfasern oder aus Kunstfaservliesen. Diese Materialien neigen jedoch zur Aufnahme von Ablagerungen des zu filternden Mediums und somit zu Verstopfungen. Daher muss ein derartiger Aerosolfilter bereits nach kurzer zeit ausgewechselt und durch neue Aerosolfilter ersetzt werden. Inbesondere bei der Filtration von toxischen oder radioaktiven Stoffen soll jedoch jeglicher diese Stoffe enthaltender Abfall vermieden werden. Der Erfindung liegt daher die Aufgabe zugrunde, einen zur Reinigung auch toxischer und/oder radioaktiver Stoffe besonders geeigneten, regenerierbaren Aerosolfilter anzugeben.

Diese Aufgabe wird für einen Aerosolfilter der obengenannten Art erfindungsgemäß dadurch gelöst, daß die oder jede Filterfläche ein Metallgewebe aufweist, wobei das Metallgewebe jeder Filterfläche jeweils als aus Metalldraht bestehende Gewebelagen zusätzlich zu einer Bestimmungslage eine Trägerschicht und mindestens eine Schutzschicht umfaßt, und wobei die Porengröße der Bestimmungslage des Metallgewebes jeder Filterfläche mit zunehmendem Zylinderradius der Filterfläche zunimmt.

Wie sich überraschenderweise gezeigt hat, neigen die zu filternden Öle oder Aerosole weniger zum Anhaften an einem Metallgewebe als an den herkömmlichen Filtermaterialien. Dabei wirkt sich die im Vergleich beispielsweise zu einer Keramik deutlich geringere Mikrorauhigkeit des Metallgewebes besonders günstig aus. Durch die Verwendung eines Metallgewebes als Filterfläche für einen Aerosolfilter ist dieser somit nahezu rückstandsfrei reinigbar. Auch im Falle einer Verstopfung kann ein derartiger Filter beispielsweise durch Rückblasen in einfacher Weise gereinigt und einer erneuten Verwendung zugeführt werden, so daß zusätzlicher Abfall vermieden ist.

Um jeder Filterfläche eine definierbare Porengröße vorgeben und somit den Aerosolfilter dem Strömungsprofil des Mediums besonders gut anpassen zu können, umfaßt das Metallgewebe eine Anzahl von aus Metalldraht bestehenden Gewebelagen. Die Porengröße des Metallgewebes wird dabei von einer bestimmenden Schicht oder Bestimmungslage definiert, die von einer im Vergleich dazu gröberen Verteilerlage getragen ist.

Die Verteilerlage ist ihrerseits vorteilhafterweise von einer im Vergleich zur Verteilerlage wiederum gröberen Stützgewebelage getragen. Zur Vermeidung von Beschädigungen ist die Bestimmungslage auf ihrer der Verteilerlage gegenüberliegenden Seite von einer Schutzlage bedeckt.

Um die Agglomeration oder das Zusammenballen von Öl- oder Aerosoltröpfchen zu begünstigen, nimmt die Porengröße des Metallgewebes jeder Filterfläche mit zunehmendem Zylinderradius der Filterfläche zu. Dadurch ist eine besonders effektive Abscheidung von Ölen oder Aerosolen erreicht.
Vorteilhafte Ausgestaltungen der Erfindung sind Gegenstand der Unteransprüche.
Die Vorteile der Erfindung liegen insbesondere darin, daß ein Aerosolfilter mit einer Anzahl von koaxial angeordneten, annähernd zylinderförmigen Filterflächen, von denen jede ein Metallgewebe aufweist, in einfacher Weise reinigbär und somit regenerierbar ist. Da zudem Öl- oder Aerosolpartikel kaum zum Anhaften an einem derartigen Metallgewebe neigen, weist ein derartiger Aerosolfilter eine besonders hohe Lebensdauer auf.

Ein Ausführungsbeispiel der Erfindung wird anhand einer Zeichnung näher erläutert. Darin zeigen:
- Figur 1: einen Aerosolfilter mit einer Anzahl von Filterflächen im Querschnitt und
- Figur 2: im Schnitt ein Metallgewebe einer Filterfläche.

Gleiche Teile sind in beiden Figuren mit den gleichen Bezugszeichen versehen.

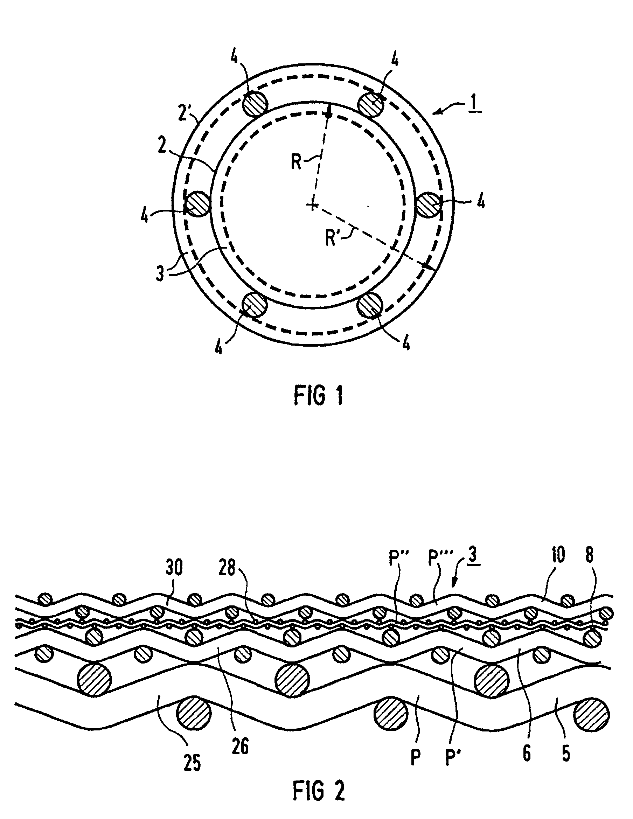

Ein Aerosolfilter 1 gemäß Figur l'umfaßt eine Anzahl von koaxial angeordneten, annähernd zylinderförmigen Filterflächen 2, 2', von denen in Figur 1 zwei dargestellt sind. Jeder der Filterflächen 2, 2' weist dabei ein Metallgewebe 3 auf. Die Filterflächen 2, 2' des Aerosolfilters 1 sind durch Abstandselemente 4 voneinander getrennt. Die Abstandselemente 4 stellen die Einhaltung eines definierten Abstands zwischen jeweils zwei Filterflächen 2 sicher.

Wie in Figur 2 dargestellt, ist das Metallgewebe 3 aus einer Aufeinanderschichtung verschiedener Lagen aufgebaut. Dazu sind Stützgewebelagen 5, eine Verteilerlage 6, eine Bestimmungslage 8 und eine Schutzlage 10 übereinander angeordnet. Jede dieser Gewebelagen 5, 6, 8, 10 besteht aus einem Gewebe von Metalldraht 25, 26, 28, 30, wobei die Dicke des jeweiligen Metalldrahts 25, 26, 28, 30 sowohl die Dicke als auch die Größe von durch benachbarte Metalldrähte 25, 26, 28, 30 gebildeten Poren P, P', P" bzw. P' " der jeweiligen Gewebelage 5, 6, 8 bzw. 10 bestimmt. Wie in der Figur 2 angedeutet, variiert die Dicke des Metalldrahts 25, 26, 28, 30 je nach Funktion der jeweiligen Gewebelage 5, 6, 8, 10. Die Bestimmungslage 8 weist dabei den dünnsten Metalldraht 28 auf. Dieser Metalldraht 28 ist derart verwoben, daß Porengrößen P" der Bestimmungslage 8 von etwa einigen um entstehen. Diese Porengröße P" der Bestimmungslage 8 definiert, welche Partikelgröße von einer das Metallgewebe 3 aufweisenden Filterfläche 2, 2' zurückgehalten und welche Partikelgröße durchgelassen wird.

Die Bestimmunglage 8 wird von der einen vergleichsweise gröberen Metalldraht 26 aufweisenden Verteilerlage 6 getragen, die ihrerseits auf der Stützlage 5 angeordnet ist. Die Stützlage 5, die wiederum aus einem im Vergleich zum Metalldraht 26 der Verteilerlage 6 dickeren Metalldraht 25 aufgebaut ist, und die Verteilerlage 6 weisen beide im Vergleich zur Bestimmungslage 8 größere Porenweiten P, P' auf. Die Verteilerlage 6 und die Stützlage 5 sind somit für eine Filtration an sich nicht entscheidend. Die Bestimmungslage 8 ist auf der der Verteilerlage 6 abgewandten Seite von der Schutzlage 10 bedeckt, die ebenfalls gröberen Metalldraht 30 und somit größere Poren P' " aufweist als die Bestimmungslage 8.

Ein derartiges Metallgewebe 3, dessen Gewebelagen 5, 6, 8, 10 beispielsweise durch Schweißen, durch Sintern oder durch andere Verbindungsverfahren zusammengefügt sind, kann für einen besonders widerstandsfähigen Aerosols 1 aus einer korrosionsbeständigen Legierung, wie beispielsweise Hastelloy oder Carpenter, oder aus einer hitzebeständigen Legierung, wie beispielsweise Inconel, bestehen.

Durch die Verwendung eines derartigen Metallgewebes 3 für einen Aerosolfilter 1 wird eine hohe Widerstandsfähigkeit des Aerosolfilters 1 gegen hohe und niedrige Temperaturen sowie Korrosion erreicht. Darüber hinaus weist ein derartiger Aerosolfilter 1 eine besonders hohe mechanische Festigkeit und Stoßfestigkeit sowie eine hohe Filtrationsgenauigkeit auf. Der Aerosolfilter 1 ist einfach zu reinigen und somit häufig wiederverwendbar.

Die Porengröße des Metallgewebes 3 jeder Filterfläche 2, 2' nimmt mit zunehmendem Zylinderradius der Filterfläche 2, 2' zu. Im Ausführungsbeispiel gemäß Figur 1 sind daher die Poren aller Gewebelagen der Filterfläche 2' mit Radius R' größer als die entsprechenden Poren der Gewebelagen der Filterfläche 2 mit Radius R.

Durch die mit dem Zylinderradius R, R' zunehmende Größe einer Filterfläche 2, 2' ist erreicht, daß sich die Strömungsgeschwindigkeit des zu filternden Mediums beim Durchströmen des Aerosolfilters 1 von innen nach außen verlangsamt. Durch diese Geschwindigkeitsverringerung werden durch Zusammenballungseffekte Öl- oder Aerosoltröpfchen mit zunehmendem Zylinderradius R, R' der Filterflächen 2, 2' zunehmend größer und somit schwerer, so daß sie durch Gravitationseffekte, bevorzugt im Außenbereich des Aerosolfilters 1, abgeschieden werden. Da das Metallgewebe 3 besonders einfach und exakt bearbeitbar ist, können die Filterflächen 2, beispielsweise hinsichtlich ihrer Anordnung und der Porengröße ihrer Metallgewebe 3 besonders gut an das Strömungsprofil des zu filternden Mediums angepaßt werden. Dadurch wird eine besonders effektive Filtration erreicht.

Der Aerosolfilter 1 kann durch Rückblasen gereinigt und somit regeneriert werden. Durch die Verwendung des Metallgewebes 3 in den Filterflächen 2, 2' des Aerosolfilters 1 wird somit Abfall vermieden. Außerdem weist der Aerosolfilter 1 eine besonders lange Lebensdauer auf.

## Patentansprüche

1. Aerosolfilter (1) mit einer Mehrzahl von koaxial angeordneten zylinderförmigen Filterflächen (2, 2'), die jeweils ein Metallgewebe (3) aufweisen, wobei das Metallgewebe (3) jeder Filterfläche (2, 2') jeweils als aus Metalldraht bestehende Gewebelagen zusätzlich zu einer Bestimmungslage (8) eine Trägerschicht (5) und mindestens eine Schutzschicht (10) umfaßt, und wobei die Porengröße (P") der Bestimmungslage (8) des Metallgewebes (3) jeder Filterfläche (2, 2') mit zunehmendem Zylinderradius (R, R') der Filterfläche (2, 2') zunimmt.

2. Aerosolfilter (1) nach Anspruch 1, bei dem zwischen zwei jeweils benachbarten Filterflächen (2, 2') jeweils eine Anzahl von Abstandshaltern (4) angeordnet ist.

3. Aerosolfilter (1) nach Anspruch 1 oder 2, bei dem das Metallgewebe (3) jeder Filterfläche (2, 2') jeweils eine verteilerlage (6) aufweist, die zwischen der Bestimmungslage (8) und der Trägerschicht (5) angeordnet ist.

4. Aerosolfilter (1) nach einem der Ansprüche 1 bis 3, bei dem das Metallgewebe (3) jeder Filterfläche (2, 2') jeweils aus Metalldraht aus einer korrosionsbeständigen oder einer wärmebeständigen Legierung aufgebaut ist.

5. Verwendung eines Aerosolfilters (1) nach einem der Ansprüche 1 bis 4 zum Filtern eines aerosolhaltigen Strömungsmediums.

6. Verwendung eines Aerosolfilters (1) nach einem der Ansprüche 1 bis 4 zur Behandlung eines Strömungsmediums, das giftige oder radioaktive Substanzen umfaßt.

## Claims

1. Aerosol filter (1) having a number of coaxially disposed cylindrical filter areas (2, 2') each having a metallic gauze (3), wherein the metallc gauze (3) of each filter area (2, 2') comprises a carrier layer (5) and at least one protective layer (10) being in the form of woven plies consisting of metallic netting in each case in addition to a defining layer (8), and wherein the pore size (P") of the defining layer (8) of the metallic gauze (3) of each filter area (2, 2') increases with an increasing cylinder radius (R, R') of the filter area (2, 2').

2. Aerosol filter (1) according to claim 1, in which between two respectively adjoining filter areas (2, 2') is disposed, in each case, a number of spacers (4).

3. Aerosol filter (1) according to claim 1 or 2, in which the metallic gauze (3) of each filter area (2, 2') has, in each case, a distributing layer (6) which is disposed between the defining layer (8) and the carrier layer (5).

4. Aerosol filter (1) according to one of claims 1 to 3, in which the metallic gauze (3) of each filter area (2, 2') is composed in each case, of metal wire made of a corrosion-resistant or heat-resistant alloy.

5. Use of an aerosol filter (1) according to one of claims 1 to 4 for filtering an aerosol-containing fluid medium.

6. Use:of an aerosol filter (1) according to one of claims 1 to 4 for treating a fluid medium which comprises toxic or radioactive substances.

## Revendications

1. Filtre (1) collecteur d'aérosol, comprenant une pluralité de surfaces (2,2') filtrantes de forme cylindrique qui sont disposées coaxialement et qui comportent respectivement une toile (3) métallique, la toile (3) métallique de chaque surface (2,2') filtrante, respectivement sous la forme de strates de toile de fil métallique, comprenant, en plus d'une couche (8) la déterminant, une couche (5) support et au moins une couche (10) de protection et la dimension (P") des pores de la couche (8) déterminant la toile (3) métallique de chaque surface (2,2') filtrante augmentant au fur et à mesure qu'augmente le rayon (R') cylindrique de la surface (2,2') filtrante.

2. Filtre (1) collecteur d'aérosol suivant la revendication 1, dans lequel il est interposé entre deux surfaces (2,2') filtrantes respectivement voisines respectivement un certain nombre d'entretoises (4).

3. Filtre (1) collecteur d'aérosol suivant la revendication 1 ou 2, dans lequel la toile (3) métallique de chaque surface (2,2') filtrante comporte respectivement une strate (6) formant répartiteur, qui est interposée entre la strate (8) la déterminant et la couche (5) du support.

4. Filtre (1) collecteur d'aérosol suivant la revendication 3, dans lequel la toile (3) métallique de chaque surface (2,2') filtrante est constituée respectivement en fil métallique en un alliage résistant à la corrosion ou résistant à la chaleur.

5. Utilisation d'un filtre (1) collecteur d'aérosol suivant l'une des revendications 1 à 4, pour filtrer un fluide en écoulement contenant des aérosols.

6. Utilisation d'un filtre (1) collecteur d'aérosol suivant l'une des revendications 1 à 4, pour le traitement d'un fluide en écoulement, qui comprend des substances toxiques ou radioactives.
